Europäisches Patentamt

European Patent Office

Office européen des brevets

(11) Veröffentlichungsnummer: **0 174 905**
**B1**

(12) **EUROPÄISCHE PATENTSCHRIFT**

(45) Veröffentlichungstag der Patentschrift:
**22.06.88**

(51) Int. Cl.⁴: **H 02 B 13/02**

(21) Anmeldenummer: **85730107.1**

(22) Anmeldetag: **16.08.85**

(54) Metallgekapselte, druckgasisolierte Hochspannungsschaltanlage mit mehreren, mittels Schottdurchführungsisolatoren gasdicht geschotteten Teilabschnitten der Kapselung.

(30) Priorität: **07.09.84 DE 3433362**

(43) Veröffentlichungstag der Anmeldung:
**19.03.86 Patentblatt 86/12**

(45) Bekanntmachung des Hinweises auf die Patenterteilung:
**22.06.88 Patentblatt 88/25**

(84) Benannte Vertragsstaaten:
**AT CH DE FR GB LI SE**

(56) Entgegenhaltungen:
**DE - A - 2 216 238**
**DE - A - 2 315 323**

(73) Patentinhaber: **Siemens Aktiengesellschaft Berlin und München, Wittelsbacherplatz 2, D-8000 München 2 (DE)**

(72) Erfinder: **Eggert, Horst, Gneisenaustrasse 84, D-1000 Berlin 61 (DE)**
Erfinder: **Olsen, Willi, Ing., Am Laubwald 3, D-1000 Berlin 13 (DE)**

## Beschreibung

Die Erfindung bezieht sich auf eine metallgekapselte druckgasisolierte Hochspannungsschaltanlage mit mehreren, mittels Schottdurchführungsisolatoren gasdicht geschotteten Teilabschnitten der Kapselung (Gasräume), der eine auf Störlichtbogen ansprechende Überwachungseinrichtung zuordnungsbar ist, die auf die Kapselungaussenseite anzubringende Sensoren enthält, deren Signal einer Auswertevorrichtung zugeführt wird.

Eine derartige metallgekapselte druckgasisolierte Hochspannungsschaltanlage mit einer Überwachungseinrichtung für Störlichtbogen ist aus der US-A-37 86 293 (= DE-A-23 15 323) bekannt. Dabei kann die Überwachungseinrichtung ständig zwecks Betriebsüberwachung oder auch nur vorübergehend zwecks Nachprüfung des Betriebszustandes der Anlage zugeordnet werden. Die bekannte Überwachungseinrichtung enthält als Sensoren, die auf der Kapselungsaussenseite angeordnet werden akustische Sensoren, nämlich elektroakustische Wandler, d.h. Körperschallmikrophone. Diese werden jeweils benachbart zu einem Schottdurchführungsisolator angeordnet, der jeweils einen Gasraum in der Kapselung begrenzt. Dadurch kann eine Lokalisierung des Gasraumes, in dem der Störlichtbogen auftritt, vorgenommen werden. Die Signale der Sensoren werden bei der bekannten Überwachungseinrichtung einer Auswerteeinrichtung zugeleitet, die Verstärker, frequenz- und amplitudenabhängige Filter und eine Zeitschalteinrichtung enthalten, sowie eine Signal bzw. Anzeigeeinrichtung. Dieser besondere Aufbau der bekannten Auswerteeinrichtung erfasst durch die Abgrenzung auf einen bestimmten Frequenz- bzw. Amplitudenbereich nur die charakteristischen Geräusche eines sich aufgrund eines dielektrischen Durchschlag aubildenden Lichtbogens, deren Hauptkomponente das Doppelte der Netzfrequenz aufweist. Ausserdem werden nur diejenigen Signale verstärkt, die eine Mindestamplitude aufweisen, so dass Störsignale unterhalb eines bestimmten Pegels nicht zur Auswertung gelangen. Ferner berücksichtigt die bekannte Auswerteeinrichtung auch die Tatsache, dass innerhalb einer metallgekapselten druckisolierten Hochspannungsschaltanlage auch während des normalen Betriebes Lichtbögen entstehen, nämlich beim Schalten des Leistungsschalters unter Last. Die Zeitschalteinrichtung der Auswerteeinrichtung lässt die gegebenen Signale eines Lichtbogens nur dann durch, wenn das auftretende Signal länger als die Löschzeit des Leistungsschalters beträgt. Auf diese Weise ist sichergestellt, dass die Auswerteeinrichtung nur Störlichtbogen erfasst und den Ausschaltlichtbogen eines Leistungsschalters nicht auswertet.

In Netzen, die neben Freileitungen nach metallgekapselte, druckgasisolierte Hochspannungsschaltanlagen einschliessen, ist ausserdem ein normales, automatisch arbeitendes Netzschutzsystem vorgesehen. Dieser Netzschutz würde auch bei Erd- oder Kurzschlüssen in der metallgekapselten Hochspannungsschaltanlage ansprechen und, wie bei Freileitungen üblich, entsprechend einem vorgegebenen Staffelungssystem eine Wiedereinschaltung veranlassen. Bei Freileitungssystemen kann die Kurzunterbrechung ein Wegschalten des Störlichtbogens bewirken, doch in einer metallgekapselten Hochspannungsschaltanlage ist dieser Effekt praktisch nicht gegeben. Dadurch würde dort der Störlichtbogen wieder gezündet und einen weiteren Druckanstieg in dem betroffenen Gasraum bewirken.

Die mit Lichtbogen verbundenen Störungen innerhalb der metallgekapselten druckgasisolierten Hochspannungsschaltanlage können Anlageteile beschädigen oder verunreinigen. Dadurch ergibt sich die Notwendigkeit, einzelne Teilabschnitte der Kapselung bzw. Gasräume nach Störfällen abzuschalten und drucklos zu machen, um in ihnen, zwecks Reparatur oder Wartung, Montagearbeiten durchführen zu können. Auch andere Reparaturarbeiten oder Arbeiten zur Erweiterung einer derartigen Anlage können das teilweise Abschalten und Öffnen vorhandener Anlagen erforderlich machen.

Die Begrenzungsflächen der geschotteten Teilabschnitte der Kapselung bzw. der Gasräume sind jeweils Schottdurchführungsisolatoren. Diese bestehen im allgemeinen aus Kunststoff, z.B. Giessharz auf Epoxidharzbasis. Sie sind hinsichtlich ihrer mechanischen Festigkeit so bemessen, dass sie den Beanspruchungen im normalen Betrieb und bei inneren Störlichtbogen, bei insgesamt geschlossener metallischer Kapselung, mit genügender Sicherheit widerstehen. Dadurch wird die Wirkung eines Störlichtbogens auf den betroffenen Gasraum begrenzt. Bei Montagearbeiten bilden aber einige dieser Schottdurchführungsisolatoren ein abschliessendes, einseitig frei zugängliches Wandelement der Kapselung, das nur auf einer Seite mit dem normalen Betriebsdruck des Isoliergases beaufschlagt ist, dem aber der Gegendruck des sonst anschliessenden Gasraumes fehlt. Dies hat zur Folge, dass der nur einseitig mit dem Betriebsgasdruck beaufschlagte Schottdurchführungsisolator durch den Druckanstieg beim Auftreten eines Störlichbogens mechanisch höher als im normalen Betriebsfall belastet wird. Beim Zusammentreffen von maximaler Stromstärke und langer Brenndauer des Störlichtbogens ist dann nicht auszuschliessen, dass der Schottdurchführungsisolator durch den Druckanstieg bersten kann, so dass dann eine Gefährdung für das Montagepersonal besteht.

Der Erfindung liegt die Aufgabe zugrunde, eine einfache und wenig aufwendige Möglichkeit zu schaffen, Personalgefährdung bei Montagearbeiten zu vermeiden.

Zur Lösung dieser Aufgabe ist eine metallgekapselte druckgasisolierte Hochspannungsschaltanlage der eingangs beschriebenen Art gemäss der Erfindung so ausgebildet, dass die Überwachungseinrichtung und die Auswerteeinrichtung sowie eine Auslöseeinrichtung Teile einer Schutzeinrichtung für Montagearbeiten an der Hochspannungsschaltanlage sind, dass die Sensoren der Überwachungseinrichtung jeweils an der Kapselung (am Druckbehälter) von Gasräumen angeordnet sind, die mit einem durch die Montagearbeit einseitig offenliegenden Schottdurchführungsisolator abschliessen und spannungsführende Leiterteile aufweisen und dass die Auslöseeinrichtung mit Mitteln zur Auslösung der Ausschaltung des oder der Einspeiseschalter für die spannungsführenden Leiterteile im Gasraum bzw. im Teilabschnitt der Kapselung mit dem einseitig offenliegenden Schottdurchführungsisolator sowie mit Mitteln zur Blockierung der Wiedereinschaltung dieser Einspeiseschalter versehen ist.

Man erhält auf diese Weise eine Schutzeinrichtung, die in einfachster Weise vor der Durchführung von Montagearbeiten in der Hochspannungsschaltanlage angebracht und nur während der Dauer der Arbeiten beibehalten wird. Die Schutzeinrichtung ist also ein Sonderwerkzeug und ständig wieder neu einsetzbar. Wird für eine Montagearbeit ein Druckbehälter der Kapselung entfernt oder geöffnet, so liegen die benachbarten Schottdurchführungsisolatoren einseitig offen. Man ordnet nun jeweils mindestens einen Sensor für die Erfassung von Störlichtbögen an der Kapselungsaussenseite der der Montagestelle benachbarten, an Spannung liegenden Gasräumen an, die mit einem einseitig offenen Schottdurchführungsisolator abschliessen und spannungsführende Leiterteile aufweisen. Der Sensor ist über die Auswerteeinrichtung direkt und gegebenenfalls parallel zum üblichen Netzschutz mit der Auslöseeinrichtung der Einspeiseschalter für die spannungsführenden Teile in dem betreffenden Gasraum verbunden.

Die Schutzeinrichtung löst bei Auftreten eines Störlichtbogens im gefährdeten Gasraum den oder die betreffenden Einspeiseschalter in einem so kurzen Zeitraum und zwar unter Umgehung des betriebsmässigen Netzschutzes aus, dass der Störlichtbogen abgeschaltet wird, bevor der Druckanstieg in dem Gasraum Werte annimmt, welche die mechanische Festigkeit des einseitig freiliegenden Schottdurchführungsisolator überschreiten würden. Da die Schutzeinrichtung nach ihrem ersten Ansprechen über die Auslöseeinrichtung eine Wiedereinschaltung des Einspeiseschalters ebenfalls verhindert, ist mit Sicherheit eine Gefährdung des Montagepersonals ausgeschlossen.

Als Sensoren der Schutzeinrichtung empfiehlt es sich akustische oder auch optische Sensoren zu verwenden. Die optischen Sensoren, wie z.B. Fotozellen, setzen zwar das Vorhandensein von Sichtfenstern in der Kapselungswand voraus, haben aber den Vorteil eines wesentlich einfacheren Aufbaus der Schutzeinrichtung. Es ist nämlich nur für den gefährdeten Gasraum mit dem einseitig offenliegenden Schottdurchführungsisolator ein Sensor erforderlich und eine einfache Auswerteeinrichtung, da diese allein auf die von dem Störlichtbogen verursachte Leuchterscheinung anzusprechen braucht.

Bei der zur Schutzeinrichtung gehörenden Auslöseeinrichtung können die Mittel zur Auslösung des Einspeiseschalters bzw. zur Blockierung des Wiedereinschaltkommandos mechanisch oder elektrisch ausgebildet sein. Elektrische Mittel können z.B. den Stromkreis der Einschaltspule des Einspeiseschalters unterbrechen. Mechanische Mittel haben den Vorteil weniger anfällig und leicht überprüfbar zu sein.

Es empfiehlt sich, die Zeit, nach der die Schutzeinrichtung nach dem Auftreten des Sensorsignales den Einspeiseschalter ausgeschaltet hat, möglichst kleiner als 100 ms zu wählen. Dies vergrössert die durch die Schutzeinrichtung gegebenen Sicherheit. Diese Zeiten sind auch bei der Anwendung von akustischen Sensoren realisierbar, da der normale Ausschaltlichtbogen eines Leistungsschalters im allgemeinen kleiner als 20 ms ist, so dass die Auswerteeinrichtung über das Zeitschaltglied diesen normalen betriebsmässigen Lichtbogen mit Sicherheit eliminieren kann.

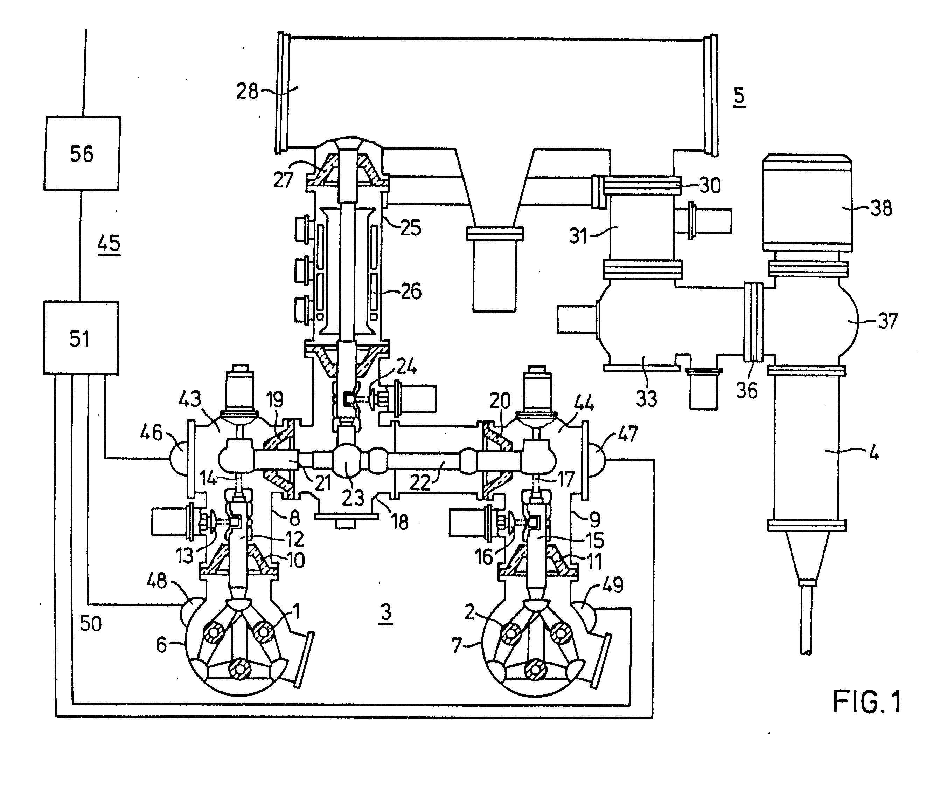

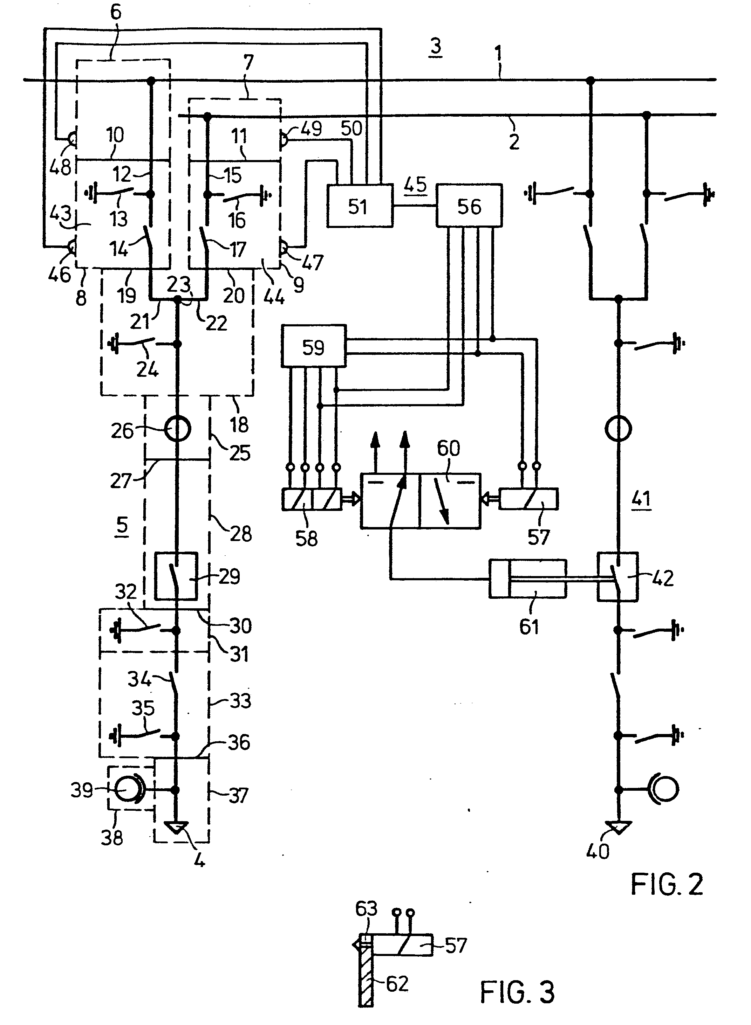

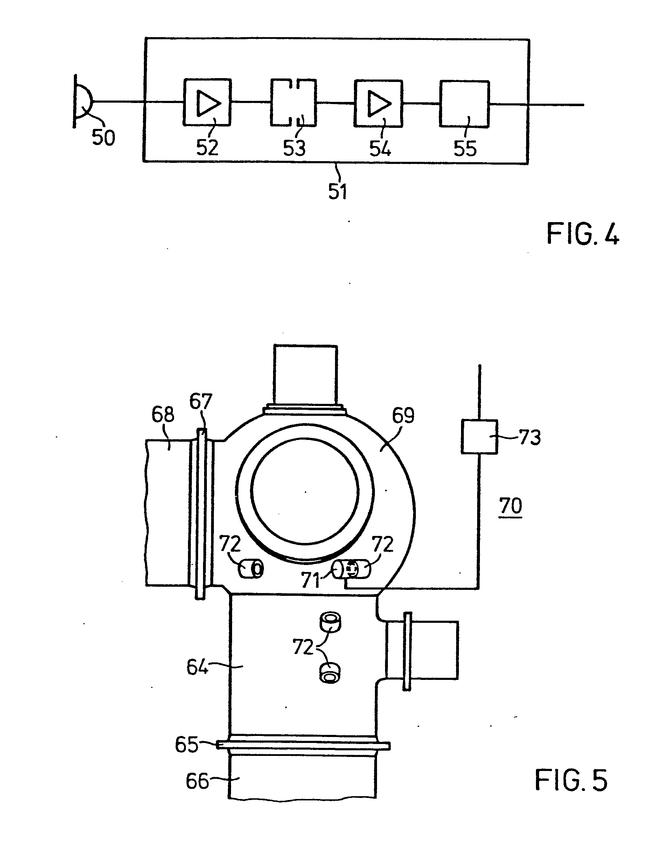

Im folgenden sei die Erfindung noch anhand der in den Figuren 1 bis 5 der Zeichnung dargestellten Ausführungsbeispiele näher erläutert. Figur 1 zeigt schematisch eine metallgekapselte druckgasisolierte Hochspannungsschaltanlage teilweise im Längsschnitt, die mit einer Schutzeinrichtung gemäss der Erfindung versehen ist. In Fig. 2 ist deren Schaltbild ebenfalls schematisch dargestellt. Fig. 3 zeigt ein Detail der Fig. 2 in etwas abgewandelter Form. Fig. 4 zeigt schematisch Details der Auswerteeinrichtung nach Fig. 2. In Fig. 5 ist ein etwas abgewandelter Druckbehälter eines zweiten Ausführungsbeispiels dargestellt.

Bei dem in den Figuren 1 und 2 dargestelltem Ausführungsbeispiel sind zwei Sammelschienensysteme 1 und 2 in einer metallgekapselten, mit SF$_6$ druckgasisolierten Hochspannungsschaltanlage 3 vorgesehen, die dreipolig gekapselt sind und parallel zu einander verlaufen. An der Stelle des zu einem Kabelanschluss 4 führenden Feldabzweigs 5 liegen die Sammelschienen des Sammelschienensystems 1 in dem Druckbehälter 6 und die des Sammelschienensystems 2 in dem Druckbehälter 7. An die Druckbehälter 6 bzw. 7 schliesst sich jeweils ein Druckbehälter 8 bzw. 9 an, wobei zwischen den Druckbehältern 6, 8 bzw. 7, 9 jeweils ein Schottdurchführungsisolator 10 bzw. 11 vorgesehen ist. In Druckbehälter 8 befinden sich die mit dem Sammelschienensystem 1 verbundenen Leiterteile 12, die zu einem Erdungsschalter 13 und einem Trennschalter 14 führen. Entsprechend liegen im Druckbehälter 9 Leiterteile 15, die mit den Sammelschienensystem 2 verbunden sind und zu einem Erdungsschalter 16 und einem Trennschalter 17 führen.

An die Druckbehälter 8 bzw. 9 schliesst sich ein weiterer Druckbehälter 18 an, der zum Druckbehälter 8 den Schottdurchführungsisolator 19 und zum Druckbehälter 9 den Schottdurchführungsisolator 20 aufweist. Durch den Schottdurchführungsisolator 19 sind die vom Trennschalter 14 kommenden Leiterteile 21 geführt. Entsprechend durchsetzen den Schottdurchführungsisolator 20 die vom Trennschalter 17 kommenden Leiterteile 22. Die Leiterteile 21 und 22 werden im Innern des Druckbehälters 18 miteinander verbunden. Dieser bildet somit den Verteilerbaustein 23, in dem ausserdem noch der Erdungsschalter 24 angeordnet ist.

An den Druckbehälter 18 schliesst sich im Verlauf des Feldabzweigs 5 jetzt über eine normale Durchführung der Druckbehälter 25 an, der den Stromwandler 26 enthält, sowie über den Schottdurchführungsisolator 27 der Druckbehälter 28 mit dem Leistungsschalter 29. Darauf folgt wiederum über einen Schottdurchführungsisolator 30 der Druckbehälter 31 mit dem Erdungsschalter 32, daran anschliessend der Druckbehälter 33 mit dem Trennschalter 34 und dem Erdungsschalter 35 und daran wiederum schliesst über den Schottdurchführungsisolator 36 der Druckbehälter 37 des Kabelanschluss 4 an, an dem noch der Druckbehälter 38 mit dem Spannungswandler 39 angeschlossen ist.

An einer anderen Stelle der metallgekapselten druckgasisolierten hochspannungsschaltanlage 3 ist ein zweiter ebenfalls zu einem Kabelanschluss 40 führender Feldabzweig 41 gleichen Aufbaus wie der Feldabzweig 5 vorgesehen, dessen Leistungsschalter ein Einspeiseschalter 42 für die beiden Sammelschienensysteme 1 und 2 ist.

Wenn nun der Druckbehälter 18 mit dem Verteilerbaustein 23 im Feldabzweig 5 im Rahmen von Montagearbeiten drucklos gemacht und geöffnet bzw. entfernt wird, so werden zuvor die Trennschalter 14 bzw. 17 geöffnet, um die Verbindung zu den Sammelschienensystemen 1 und 2 zu unterbrechen. In den Druckbehältern 8 und 9 mit den geöffneten Trennschaltern 14, 17 wird der normale Druck des Isoliergases aufrecht erhalten, jedoch sind nun die Schottdurchführungsisolatoren 19, 20 nur noch einseitig mit dem betriebsmässigen Druck des Isoliergases beaufschlagt, während sie auf der anderen Seite dem Atmosphärendruck ausgesetzt sind, d.h. einseitig offen liegen. Die Sammelschienensysteme 1 und 2 können aber auf diese Weise während der Montagearbeiten am Verteilerbaustein 23 normal weiter betrieben werden. In den Gasräumen 43 des Druckbehälters 8 bzw. 44 des Druckbehälters 9 führen dann aber die Leiterteile 12 bzw. 15 Spannung. Dadurch besteht die Möglichkeit, dass in den Gasräumen 43 bzw. 44 ein Störlichtbogen auftreten kann. Dieser könnte unter ungünstigen Umständen bewirken, dass die die Gasräume 43, 44 abschliessenden Schottdurchführungsisolatoren 19 bzw. 20 infolge der durch den Störlichtbogen auftretenden Druckerhöhung mechanisch zu stark beansprucht werden und bersten. Dadurch wäre das die Montagearbeiten am Verteilerbaustein 23 ausführende Personal gefährdet.

Man hat deshalb eine Schutzeinrichtung 45 vorgesehen, die jeweils während der gesamten Dauer der Montagearbeiten in der metallgekapselten druckgasisolierten Hochspannungsschaltanlage 3 zwischen den gefährdeten Gasräumen 43, 44 mit den einseitig offenliegenden Schottdurchführungsisolatoren 19, 20 und dem Einspeiseschalter 42 für die in Betrieb gehaltenen Sammelschienensysteme 1 und 2 eingebaut ist.

Diese Schutzeinrichtung 45 weist vier akustische Sensoren (Körperschallmikrophone) 46 bis 49 auf. Der Sensor 46 ist auf der Kapselungsaussenseite des Druckbehälters 8 angeordnet, der akustische Sensor 47 liegt entsprechend am Druckbehälter 9. Die akustischen Sensoren 46, 47 überwachen also jeweils die gefährdeten Gasräume 43, 44, in denen Störlichtbögen sofort erfasst werden sollen. Da aber die von einem Störlichtbogen erzeugten akustischen Geräusche als Körperschall in den Kapselungswänden der miteinander verbundenen Druckbehälter weitergeleitet werden, würden die Sensoren 46, 47 auch die Geräusche eines Störlichtbogens erfassen, die in einem benachbarten Feldabzweig auftreten und deren Körperschall über die Druckbehälter 6 bzw. 7 auf die Druckbehälter 8 bzw. 9 übertragen wird. Um somit feststellen zu können, aus welche Richtung der von den Sensoren 46, 47 erfasste Körperschall kommt, sind auch auf den Druckbehälter 6 der akustische Sensor 48 und auf dem Druckbehälter 7 der akustische Sensor 49 angeordnet.

Die akustischen Sensoren 46, 47 liegen also an dem Druckbehälter 8, 9 der durch die Montagearbeiten einen einseitig offenliegenden Schottdurchführungsisolator 19, 20 aufweist. Die akustischen Sensoren 48, 49 liegen dagegen am Druckbehälter 6 bzw. 7, der dem mit einem einseitig offenliegenden Schottdurchführungsisolator 19, 20 abschliessenden Gasraum 43, 44 benachbart ist. Tritt also in einem anderen Teil der Hochspannungsschaltanlage 3 ein Störlichtbogen auf, so werden die akustischen Sensoren 48 bzw. 49 ein lauteres Geräusch feststellen, als die akustischen Sensoren 46 bzw. 47. Umgekehrt ist es bei einem Störlichtbogen im Gasraum 43 oder 44, in diesem Fall registrieren die Sensoren 46, 47 jeweils ein lauteres Geräusch als die Sensoren 48, 49. Es können aber auch Laufzeitunterschiede der akustischen Signale erfasst werden. Somit kann eine Aussage über die Lokalisierung des Störlichtbogens gemacht werden und insbesondere darüber, ob er unmittelbar im gefährdeten Gasraum 43, 44 aufgetreten ist.

Die akustischen Sensoren 46 bis 49 bilden gemeinsam die Überwachungseinrichtung 50 der Schutzeinrichtung 45. Die von der Überwachungseinrichtung 50 aufgenommenen Signale werden der Auswerteeinrichtung 51 zugeführt. Der nähere Aufbau der Auswerteeinrichtung 51 ist aus Figur 4 ersichtlich. Die Überwachungseinrichtung 50 speist mit ihrem Signal zunächst einen Verstärker 52, dessen Ausgang mit einem auf das Doppelte der Netzfrequenz, beispielsweise 100 Hz abstimmbaren Filter 53 verbunden ist. Ein aufgrund eines dielektrischen Durchschlages entstehender Lichtbogen hat nämlich ein charakteristisches Geräusch, dessen Hauptkomponente das doppelte der Netzfrequenz aufweist. Das Filter 53, das auch einstellbar ausgeführt sein kann, lässt mithin nur Signale durchgehen, die einem Lichtbogen entsprechen. Das Ausgangssignal des Filters 53 wird dann einem in seiner Amplitude abstimmbaren Verstärkers 54 zugeführt, der nur diejenigen Signale verstärkt, die eine Mindestamplitude aufweisen, so dass Störsignale unterhalb eines bestimmten Pegels nicht zur Auswertung gelangen. Schliesslich wird der Ausgangswert des Verstärkers 54 einer Zeitschalteinrichtung 55 zugeführt, die im Prinzip so aufgebaut ist, dass die Signale nur dann durchlässt, wenn das auftretende Signal länger besteht als die Löschzeit eines Leistungsschalters dauert. Die Ausschaltlichtbögen eines Leistungsschalters sind nämlich normale Erscheinungen beim Betrieb einer Hochspannungsschaltanlage 3 die nicht zum Ansprechen der Auswerteeinrichtung 51 führen sollen, die nur die in ihren akustischen Signal gleichwertigen Störlichbögen erfassen soll. Auf diese Weise ist sichergestellt, dass der Ausschaltlichtbogen eines Leistungsschalters von der Auswerteeinrichtung 51 nicht weitergeleitet wird.

Bei einem von der Überwachungseinrichtung erfassten Störlichtbogen im Gasraum 43 oder 44 gibt nun die Auswerteeinrichtung 51 ein Signal an die Auslöseeinrichtung 56 weiter. Diese Auslöseeinrichtung 56 weist elektrische Mittel zur Beeinflussung des Einschaltmagneten 57 und des Ausschaltmagneten 58 des Einspeiseschalters 42 auf. Der Ein- und Ausschaltmagnet 57 bzw. 58 werden beim normalen Betrieb von der Schaltersteuerung 59 betätigt, die auch mit dem Netzschutz verbunden ist. Diesen normalen elektrischen Verbindungen sind die Zuleitungen der Auslöseeinrichtung 56 teilweise parallel geschaltet. Trifft somit ein Signal, dass in einem der Gasräume 43 bzw. 44 ein Störlichtbogen aufgetreten ist, auf die Auslöseeinrichtung 56, so bewirkt diese über den Ausschaltmagneten 58 die sofortige Ausschaltung des Einspeiseschalters 42, wobei sichergestellt ist, dass dieser nach spätestens 100 ms ausgeschaltet ist. Dies wird mittels des Ausschaltmagneten 58 dem Ventil 60 und dem Antrieb 61 des Einspeiseschalters 42 bewirkt. Ausserdem unterbricht die Auslöseeinrichtung 56 den Stromkreis des Einschaltmagneten 57, so dass dieser den Antrieb 61 des Einspeiseschalters 42 nicht mehr beeinflussen kann. Eine Widereinschaltung des Einspeiseschalters 42 durch die normale Schaltersteuerung 59 ist nach dem Ansprechen der Schutzvorrichtung 45 somit nicht mehr möglich. Durch das Ausschalten des Einspeiseschalters 42 sind die Sammelschienensysteme 1 und 2 spannungslos geworden, so dass der Störlichtbogen in den Gasraum 43 bzw. 44 so schnell erlischt, dass durch den Druckanstieg kein Bersten der Schottdurchführungsisolatoren 19 bzw. 20 auftreten kann. Eine Gefährdung des die Montagearbeiten ausführenden Personals ist somit nicht gegeben.

Figur 3 zeigt, dass der Einschaltmagnet 57 für den Einspeiseschalter 42 auch mit mechanischen Mitteln gegen eine Wiedereinschaltung blockiert werden kann. Zu diesem Zweck ist eine Platte 62, die eine entsprechende Aussparung aufweist, über den Stössel 63 des Einschaltmagneten 57 geschoben. Dadurch wird diese mechanisch an eine Bewegung gehindert, so dass die Einschaltung des Einspeiseschalters 42 durch die normale Schaltersteuerung 59 nicht mehr möglich ist.

Schliesslich ist in Figur 5 ein Teil eines weiteren Ausführungsbeispiels dargestellt. Diese zeigt einen Druckbehälter 64, der einen Trennschalter und einen Erdungsschalter enthält. Dieser Druckbehälter 64 ist auf der einen Seite über den Schottdurchführungsisolator 65 mit dem Druckbehälter 66 eines Sammelschienensystems verbunden. Auf der anderen Seite ist ebenfalls ein Schottdurchführungsisolator 67 vorgesehen, der zu dem Druckbehälter 68 eines Verteilerbausteins führt.

Bei Montagearbeiten, die zum Öffnen oder Entfernen des Druckbehälters 68 führen, würde der Schottdurchführungsisolator 67 einseitig offenliegen, aber in dem Gasraum 69 des Druckbehälters 64 wären bei geöffnetem Trennschalter spannungsführende Leiterteile vorhanden, wenn das Sammelschienensystem im Druckgehälter 66 in Betrieb bleibt. Deshalb wird vor den Montagearbeiten die Schutzeinrichtung 70 installiert.

Diese weist optische Sensoren 71 auf, da in der Kapselungswand des Druckbehälters 64 sind einige Sichtfenster 72 so angeordnet sind, dass man durch sie die Trennstrecken des Trennschalters und des Erdungsschalters beobachten kann. An einem Sichtfenster 72 ist nun als optischer Sensor 71 eine Fotozelle angeordnet, die auf die Leuchterscheinungen eines Störlichtbogens im Innern des Gasraums 69 anspricht. Die Signale des optischen Sensors 71 werden der Auswerteeinrichtung 73 zugeleitet, die Teil der Schutzeinrichtung 70 ist, die in gleicher Weise wie die im Ausführungsbeispiel gemäss den Figuren 1 und 2 beschriebene Schutzeinrichtung 45 wirksam wird.

**Patentansprüche**

1. Metallgekapselte, druckgasisolierte Hochspannungsschaltanlage (3) mit mehreren, mittels Schottdurchführungsisolatoren (19, 20; 67) gasdicht geschotteten Teilabschnitten der Kapselung (Gasräume) (43, 44; 69), der eine auf Störlichtbogen ansprechende Überwachungseinrichtung (50) zuordnungsbar ist, die auf die Kapselungsaussenseite anzubringende Sensoren (46–49; 71) enthält, deren Signal einer Auswerteeinrichtung (51, 73) zugeführt wird, dadurch gekennzeichnet, dass die Überwachungseinrichtung (50) und die Auswerteeinrichtung (51, 73) sowie eine Auslöseeinrichtung (56) Teile einer Schutzeinrichtung (45; 70) für Montagearbeiten an der Hochspannungsschaltanlage (3) sind, dass die Sensoren (46, 47, 48, 49; 71) der Überwachungseinrichtung (50) jeweils an der Kapselung (am Druckbehälter 8, 9, 64) von Gasräumen (43, 44; 69) angeordnet sind, die mit einem durch die Montagearbeit einseitig offenliegenden Schottdurchführungsisolator (19, 20; 67) abschliessen und spannungsführende Leiterteile (12, 15) aufweisen, und dass die Auslöseeinrichtung (56) mit Mitteln zur Auslösung der Ausschaltung des oder der Einspeiseschalter (42) für die spannungsführenden Leiterteile (12, 15) im Gasraum (43, 44; 69) bzw. im Teilabschnitt der Kapselung mit dem einseitig offenliegenden Schottdurchführungsisolator (19, 20; 67), sowie mit Mitteln (62) zur Blockierung der Wiedereinschaltung dieser Einspeiseschalter (42) versehen ist.

2. Metallgekapselte, druckgasisolierte Hochspannungsschaltanlage (3) nach Anspruch 1 mit Sichtfenstern (72) in der Kapselungswand, dadurch gekennzeichnet, dass die Überwachungseinrichtung optische Sensoren (71) enthält, die am Sichtfenster (72) angeordnet sind.

3. Metallgekapselte, druckgasisolierte Hochspannungsschaltanlage nach Anspruch 1 oder 2, dadurch gekennzeichnet, dass mittels der Schutzeinrichtung (45, 70) der oder die Einspeiseschalter (42) spätestens 100 ms nach dem Auftreten des Sensorsignales ausgeschaltet sind.

4. Metallgekapselte, druckgasisolierte Hochspannungsschaltanlage nach Anspruch 1 oder 3, dadurch gekennzeichnt, dass der Auslöseeinrichtung (56) mechanische Mittel (62) zugeordnet sind, welche die Wiedereinschaltung des oder der Einspeiseschalter (42) blockieren.

5. Metallgekapselte, druckgasisolierte Hochspannungsschaltanlage nach Anspruch 4, dadurch gekennzeichnet, dass am Einspeiseschalter (42) der Stössel (63) des Einschaltmagneten (57) blockiert ist.

6. Metallgekapselte, druckgasisolierte Hochspannungsschaltanlage nach Anspruch 1 oder 3, dadurch gekennzeichnet, dass die Überwachungseinrichtung (50) akustische Sensoren (46, 47, 48, 49) enthält und dass die Auswerteeinrichtung (51) frequenz- und amplitudenabhängige Filter (53, 54) und ein Zeitschaltglied (55) aufweist.

7. Metallgekapselte, druckgasisolierte Hochspannungsschaltanlage nach Anspruch 6, dadurch gekennzeichnet, dass auch an dem Druckbehälter (6, 7), der dem mit einem einseitig offenliegenden Schottdurchführungsisolator (19, 20) abschliessenden Gasraum (43, 44) benachbart ist, ein akustischer Sensor (48, 49) angeordnet ist.

## Claims

1. A metal-encased, pressure-gas-insulated high voltage switching installation (3) with a plurality of sub-sections of the casing (gas chambers) (43, 44; 69) partitioned and kept gas-tight by means of partitioning lead-through insulators (19, 20; 67), which switching installation can be assigned a monitoring device (50) which responds to parasitic arcs and which contains sensors (46–49; 71) which are to be applied to the exterior of the casing and the signal from which is supplied to an analysis device (51, 73) characterised in that the monitoring device (50) and the analysis device (51, 73), together with a circuit-breaker (56), form parts of a protection device (45; 70) for assembly work on the high voltage switching installation (3), that the sensors (46, 47, 48, 49; 71) of the monitoring device (50) are each arranged on the casing (on the pressure container 8, 9, 64) of gas chambers (43, 44; 69) which are terminated by a partitioning lead-through insulator (19, 20; 67) which is open on one side because of the assembly work and which comprise live conductor components (12, 15), and that the circuit-breaker (56) is provided with means which trigger the disconnection of the supply switch(es) (42) for the live conductor components (12, 15) in the gas chamber (43, 44; 69) and in the sub-section of the casing with the partitioning lead-through insulator (19, 20; 67) which is open on one side, and is provided with means (62) for blocking the reconnection of these supply switches (42).

2. A metal-encased, pressure-gas-insulated high voltage switching installation (3) as claimed in Claim 1, with viewing windows (72) in the casing wall, characterised in that the monitoring device contains optical sensors (71) which are arranged on the viewing window (72).

3. A metal-encased, pressure-gas-insulated high voltage switching installation as claimed in Claims 1 or 2, characterised in that by means of the protection device (45, 70) the supply switch(es) (42) is/are disconnected 100 vms at the latest following the occurrence of the sensor signal.

4. A metal-encased, pressure-gas-insulated high voltage switching installation as claimed in Claims 1 or 3, characterised in that the circuit-breaker (56) is assigned mechanical means (62) which block the reconnection of the supply switch(es) (42).

5. A metal-encased, pressure-gas-insulated high voltage switching installation as claimed in Claim 4, characterised in that in the supply switch (42) the plunger (63) of the switch-on magnet (57) is blocked.

6. A metal-encased, pressure-gas-insulated high voltage switching installation as claimed in Claim 1 or 3, characterised in that the monitoring device (50) contains acoustic sensors (46, 47, 48, 49) and that the analysis device (51) includes frequency and amplitude-dependent filters (53, 54) and a time switch device (55).

7. A metal-encased, pressure-gas-insulated high voltage switching installation as claimed in Claim 6, characterised in that an acoustic sensor (48, 49) is also arranged on the pressure container (6, 7) which is adjacent to the gas chamber (43, 44) which is terminated by a partitioning lead-through insulator (19, 20) which is open on one side.

## Revendications

1. Installation de distribution électrique haute tension (3) du type à blindage métallique et à isolation par un gaz sous pression, comportant plusieurs sections du blindage (chambres à gaz) (43, 44; 69) isolées de façon étanche au gaz à l'aide d'isolateurs de traversée de cloisons étanches (17, 20; 67), et à laquelle est susceptible d'être associé un dispositif de surveillance (5c) sensible à des arcs parasites et qui comporte des détecteurs (46–49; 71) à monter sur le côté extérieur du blindage et dont les signaux sont appliqués à un dispositif d'évaluation (51, 73), caractérisée par le fait que le dispositif de surveillance (50) et le dispositif d'évaluation (51, 73) ainsi qu'un dispositif de déclenchement (56) sont des parties constitutives d'un dispositif de protection (45; 70) pour des travaux de montage à exécuter au niveau de l'installation de distribution électrique haute tension (3), que les détecteurs (46, 47, 48, 49;

71) du dispositif de surveillance (50) sont respectivement disposés sur le blindage (sur la cuve sous pression 8, 9, 64) de chambres à gaz (43, 44; 69) qui se terminent par des isolateurs de traversée de cloisons étanches (19, 20; 67) dégagées sur un côté par les travaux de montage et qui comportent des éléments-conducteurs sous tension (12, 15) et que le dispositif de déclenchement (56) est pourvu de moyens pour déclencher l'ouverture du ou des disjoncteurs d'alimentation en tension (42) pour les éléments-conducteurs sous tension (12, 15) dans la chambre à gaz (43, 44; 69) ou dans la section partielle du blindage concernée par l'isolateur de traversée de cloison étanche (19, 20; 67) dégagé sur un côté, ainsi que des moyens (62) pour bloquer le réenclenchement de ces disjoncteurs d'alimentation en tension (42).

2. Installation de distribution électrique haute tension (3) du type à blindage métallique et à isolation par un gaz selon la revendication 1, avec des fenêtres d'inspection (72) ménagées dans la paroi du blindage, caractérisée par le fait que le dispositif de surveillance comporte des détecteurs optiques (71) qui sont disposés sur la fenêtre d'inspection (72).

3. Installation de distribution électrique haute tension du type à blindage métallique et à isolation par un gaz sous pression selon la revendication 1 ou 2, caractérisée par le fait qu'à l'aide du dispositif de protection (45, 70) le ou les disjoncteurs d'alimentation en tension (42) sont ouverts au plus tard 100 ms après l'apparition du signal du détecteur.

4. Installation de distribution électrique haute tension du type à blindage métallique et à isolation par un gaz, selon la revendication 1 ou 3, caractérisée par le fait qu'au dispositif de déclenchement (56) sont associés des moyens mécaniques (62) qui bloquent le réenclenchement du ou des disjoncteurs d'alimentation en tension (42).

5. Installation de distribution électrique haute tension du type à blindage métallique et à isolation par un gaz, selon la revendication 4, caractérisée par le fait qu'au niveau du disjoncteur d'alimentation en tension (42), le poussoir (63) de l'aimant d'enclenchement (57) est bloqué.

6. Installation de distribution électrique haute tension du type à blindage métallique et à isolation par un gaz, selon la revendication 1 ou 3, caractérisée par le fait que le dispositif de surveillance (50) comporte des détecteurs acoustiques (46, 47, 48, 49), et que le dispositif d'évaluation (51) comporte des filtres (53, 54) sélectifs du point de vue de la fréquence et de l'amplitude, ainsi qu'un élément de temporisation (55).

7. Installation de distribution électrique haute tension du type à blindage métallique et à isolation par un gaz selon la revendication 6, caractérisée par le fait qu'un détecteur acoustique (48, 49) est disposé également sur la cuve sous pression (6, 7), qui est voisine de la chambre à gaz (43, 44) qui se termine par un isolateur de traversée de cloison étanche (19, 20) qui est dégagé sur un côté.

FIG.1

FIG. 2

FIG. 3

FIG. 4

FIG. 5